# EUROPEAN PATENT APPLICATION

(11) **EP 3 832 277 A1**
(43) Date of publication of application: **09.06.2021**
(21) Application number: 20211408.8
(22) Date of filing: 03.12.2020
(51) Int. Cl.: G01K 1/14

(54) **TEMPERATURE SENSOR ASSEMBLY**

(30) Priority: 04.12.2019 IN 201941049895
(71) Applicant: TE Connectivity Germany GmbH, 64625 Bensheim (DE); TE Connectivity India Private Limited, Bangalore 560048 (IN)
(72) Inventor: Wiechert, Sebastian, 67346 Speyer (DE); Singh, Kiranpal, 560048 Bangalore (IN); Reis, Daniel, 67346 Speyer (DE); Müller, Christoph, 67346 Speyer (DE); Faas, Sven, 67346 Speyer (DE)
(74) Representative: Grünecker Patent- und Rechtsanwälte PartG mbB

(57) **Abstract**

The invention relates to a temperature sensor assembly (100) in particular for the use in the automotive field, comprising a carrier part (10) with a receptacle (20) for a temperature pin (50), a sensor element (30) for measuring the temperature and a pushing element (40) for pushing the sensor element (30) into the receptacle.

## Description

### BACKGROUND OF THE INVENTION

The invention relates to a temperature sensor assembly.

Temperature sensors are used in a variety of fields, for example in the automotive field. Often, temperature pins, also referred to as temperature lances, are used to measure a temperature at a defined location. The temperature pin can for example be a part of an electric engine and be the hottest point in the engine where a measurement of the temperature is possible. A problem associated with current temperature sensors is that the contacting of temperature pins that have different shapes, for example due to the production process or because different engine models are used, is difficult.

### SUMMARY OF THE INVENTION

The object of the invention is thus to provide a solution that allows an easy contacting of differently shaped temperature pins.

This is achieved by a temperature sensor assembly in particular for the use in the automotive field, comprising a carrier part with a receptacle for a temperature pin, a sensor element for measuring the temperature, and a pushing element for pushing the sensor element into the receptacle.

The pushing element allows the contacting of differently shaped temperature pins. It is adapted to push the sensor element onto differently shaped temperature pins.

The solution according to the invention can further be improved by the following further developments and advantageous embodiments, which are independent of each other and can be combined arbitrarily, as desired.

To achieve a compact configuration, the pushing element can be adapted to push the sensor element into the receptacle at a side of the receptacle and/or sideways into the receptacle. The sensor element is then pushed onto a side of the temperature pin. The pushing element can be adapted to push the sensor element transverse, in particular perpendicular to an insertion direction of the receptacle and/or the pin. The insertion direction is the direction along which the pin is to be inserted into the receptacle. Further, the pushing element and/or the sensor element can form a side of the receptacle.

The pushing element can comprise a spring element to achieve a safe contacting. The spring element can be a single element to keep the configuration simple. Further, the pushing element can be a single element to keep the configuration simple.

In an advantageous embodiment, the spring element can comprise a leaf spring. This can make the contacting safe and simple.

The leaf spring can comprise three curves with alternating curvature directions. This can allow a defined contacting with a good contact force. Alternating curvature direction can mean that a for example a curve going to the right is located between two curves going to the left.

In an advantageous embodiment, the leaf spring is attached at two end sections of the leaf spring. It can in particular be attached to the carrier. The carrier can for example comprise slits or small recesses for accommodating the end sections. A contact with the sensor element can take place at a central section, for example at the second of the three curves.

In a further embodiment, the pushing element can comprise a spring element and an insulation element. The insulation element can be attached to the spring element and/or vice versa. The spring element can be made from a metal and the insulation element can be made from a material that is thermally and/or electrically insulating, for example plastic or resin. The sensor element can at least be partially embedded in the insulation element.

The temperature sensor assembly can comprise a recess for at least partially accommodating the pushing element. The recess can in particular be located in the carrier part. The recess can serve to protect the pushing element. It can be open towards the receptacle and/or be in communication with the receptacle.

The recess can be slot-shaped to keep the configuration compact.

In a further advantageous embodiment, the temperature sensor assembly can comprise a connection section with at least one terminal for connection to a processing module.

The receptacle can be located at a first side of the temperature sensor assembly and the connection section can be located at a second side of the temperature sensor assembly opposite the first side.

The definition of the two sides can be relative to an insertion direction of the receptacle and/or the pin. One side can be located behind the other along the insertion direction.

In an advantageous embodiment, the connection section can be located in a housing part that is detachable from the carrier part. The housing part can be separable from or separate from the carrier part. This allows an easy exchange of one of the parts.

In other versions, the housing part and/or the connection section could be integral with the carrier part.

To allow a contacting, at least one terminal can be connected to the sensor element. This connection can for example be made via an intermediate element like a wire or a cable.

The carrier part and the housing part can be adapted to be attached to each other. To achieve this they can comprise attachment members, locking members and/or fixing members. They can in particular comprise a latching mechanism or a snapping mechanism. The connection between can be repeatedly detachable.

The carrier part can comprise a housing part receptacle for at least partially receiving the housing part.

In an advantageous embodiment, the housing part can be adapted to be fixed to an external element, in particular an element of an automobile. The housing part can comprise a fixing member, in particular a threaded hole.

Further, the temperature sensor assembly can comprise sealing elements. For example, sealing elements can be on an outside for sealing together with further elements, for example a part of an automobile. The temperature sensor assembly can alternatively or in addition comprise a cable sealing or a terminal sealing for sealing between a cable or terminal and a part of the temperature sensor assembly, for example the housing part.

A set for a temperature sensor assembly can comprise a carrier part with a receptacle for a temperature pin, a sensor element for measuring the temperature, a pushing element for pushing the sensor element into the receptacle and a housing part that is detachable from the carrier part, and that comprises a connection section with at least one terminal for connection to a processing module.

The set can further comprises at least one cable for connecting the sensor element to the terminal. In order to allow a simple manufacturing process, the cable can be pre-mounted to the sensor element.

In a modular system that allows creating temperature sensors mountable to different cars, the set can comprise at least two different housing elements. The housing elements can have different dimensions, in particular lengths, and/or different fixing members.

In order to be adaptable to different housing elements, the cable can be pre-mounted to the sensor element, but not to the terminal. The cable can then be cut to the right length depending on the housing to which it is mounted and the terminal can then be mounted.

In order to improve the temperature measurement, thermal compound, also known as heat paste or thermal paste, can be present in the receptacle. The thermal compound can in particular fill the area between and around the temperature pin and the sensor element. The thermal compound can be premounted in the receptacle before the temperature pin is inserted or be applied later.

The processing module can for example be an engine control unit (ECU) of a car.

The invention will now be described in greater detail and in an exemplary manner using advantageous embodiments and with reference to the drawings. The described embodiments are only possible configurations in which, however, the individual features as described above can be provided independently of one another or can be omitted.

### BRIEF DESCRIPTION OF THE DRAWINGS

The invention will now be described by way of example with reference to the accompanying drawings, in which:
- Fig. 1: shows a schematic perspective view of a first embodiment of a temperature sensor assembly;
- Fig. 2: shows a schematic cross section of the first embodiment of Fig. 1 mounted to an engine;
- Fig. 3: shows a schematic perspective exploded view of the embodiment of Fig. 1;
- Fig. 4: shows a schematic perspective view of the first embodiment from a different angle;
- Fig. 5: shows a schematic perspective view of a further embodiment of a temperature sensor assembly;
- Fig. 6: shows a schematic cross section of the embodiment of Fig. 5;
- Fig. 7: shows a schematic side view of a further embodiment;
- Fig. 8: shows a schematic perspective view of the further embodiment of fig 7.

### DETAILED DESCRIPTION OF THE INVENTION

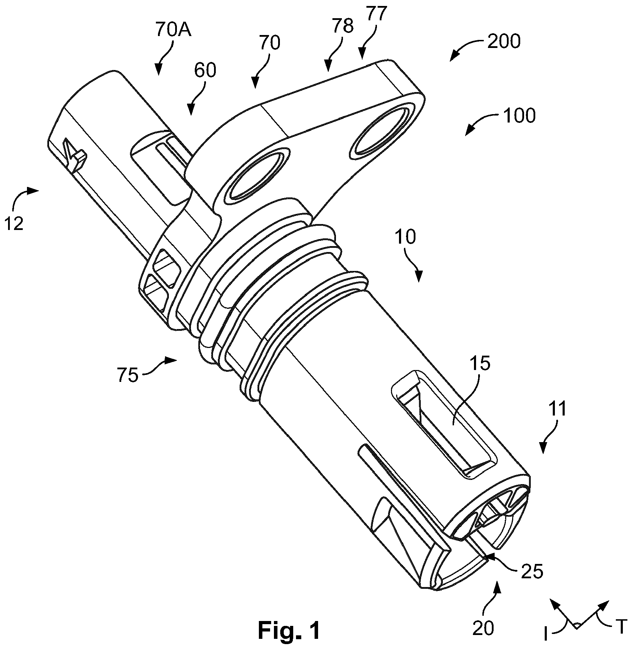

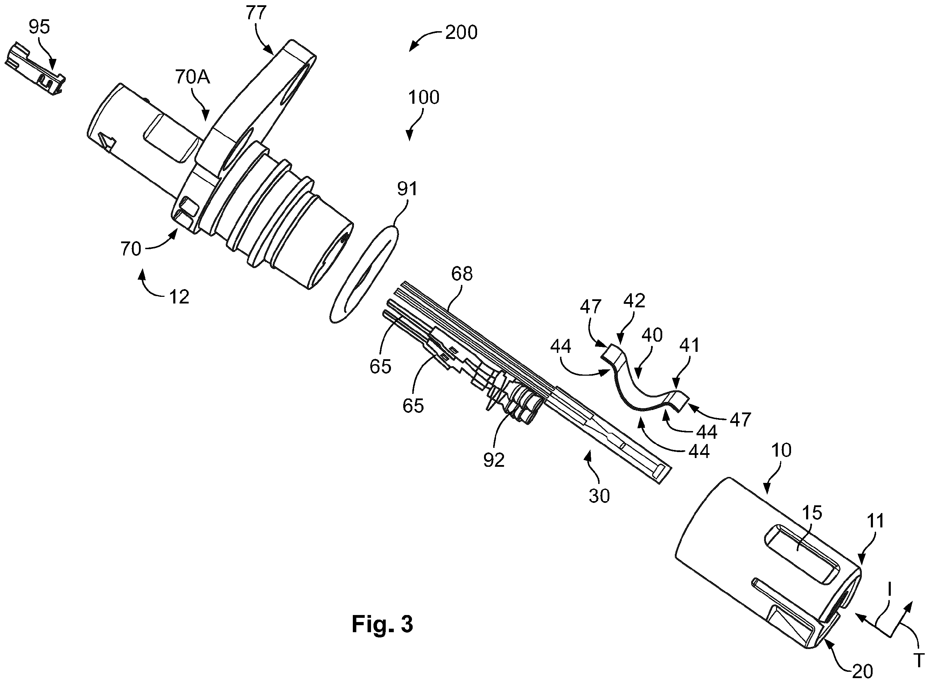

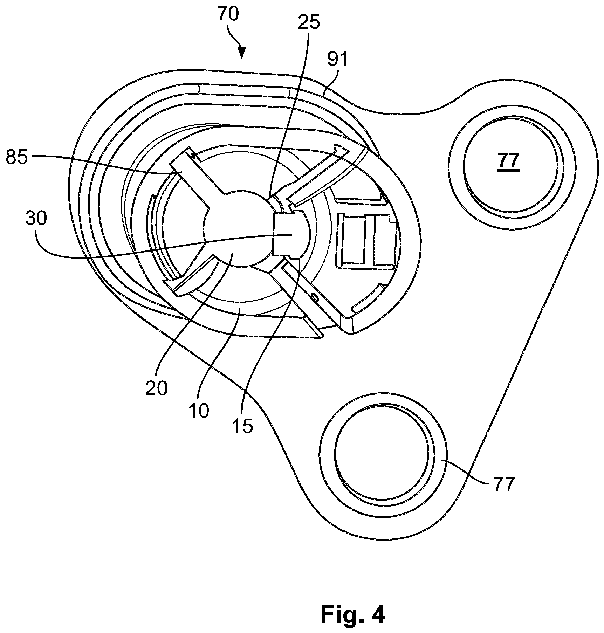

In Figs. 1 to 4, a first embodiment of a temperature sensor assembly 100 in particular for the use in the automotive field is shown. The temperature sensor assembly 100 comprises a carrier part 10 with a receptacle 20 for a temperature pin 50. The temperature pin 50 can for example be located on an engine housing of a car. A temperature measured at the temperature pin 50 can relate to a temperature of critical parts of the engine.

In order to sense the temperature at the temperature pin 50, the temperature sensor assembly 100 further comprises a sensor element 30. The sensor element 30 can for example comprise temperature-dependent resistors or other temperature-dependent electrical components.

The temperature pins 50 are usually shaped differently due to manufacturing tolerances. For example, they can be welded and the welding can result in different dimensions or shapes. In order to always contact the temperature pin 50 correctly, the temperature sensor assembly 100 further comprises a pushing element 40 for pushing the sensor element 30 into the receptacle 20 and thus onto the temperature pin 50.

The pushing element 40 is adapted to push the sensor element 30 into the receptacle 20 at a side 25 of the receptacle 20 and thus onto a side of the temperature pin 50. The pushing element 40 pushes the sensor element 30 along a transverse direction T that is transverse, in particular perpendicular to an insertion direction I of the receptacle 20, along which the temperature pin 50 is inserted into the receptacle 20. The sensor element 30 and/or the pushing element 40 can form a side of the receptacle 20.

The pushing element 40 of the depicted embodiment is a single element, namely a spring element 41. The spring element 41 is in particular a leaf spring 42 having three curves 44 with alternating curvature directions and two end sections 47 that are held in slits 18 of the carrier part 10.

The pushing element 40 is made from a metal strip, for example by cutting, bending and/or coining.

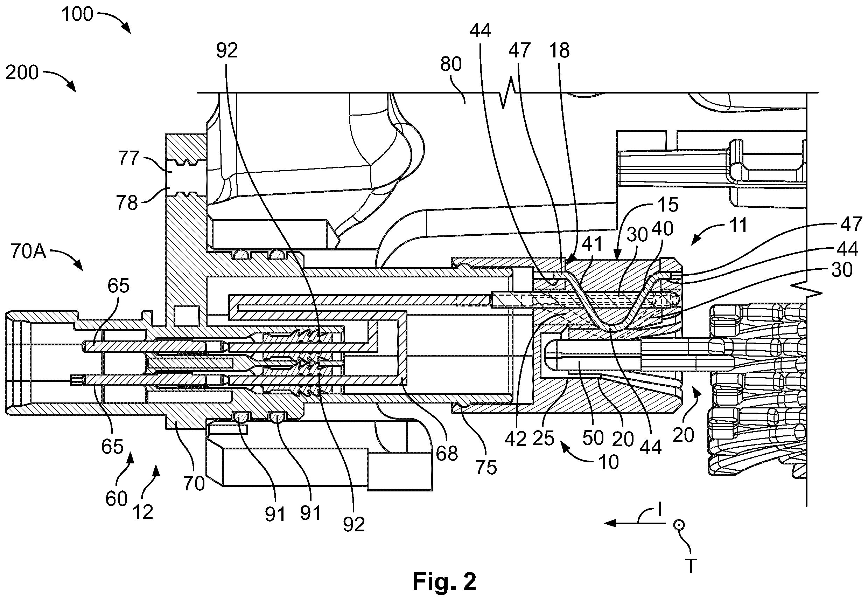

The pushing element 40 contacts the sensor element 30 at the central curve 44. In Fig. 2, the sensor element 30 is shown twice. Once, namely in the fully visible version, the undeflected position of the sensor element 30 shown. The deflected configuration of the sensor element 30 is shown in a further version in broken lines.

The temperature sensor assembly 100 comprises a recess 15 for at least partially accommodating the pushing element 40. This recess 15 is open towards the receptacle 20 so that the sensor element 30 can be pushed onto the temperature pin 50.

The recess 15 is slot-shaped to allow an easy movement of the sensor element 30 and the pushing element 40.

Stretching recesses 85 on the carrier part 10 allow an expansion of the receptacle 20 when the temperature pin 50 is inserted.

The temperature sensor assembly 100 further comprises a connection section 60 with at least one terminal 65 for connection to a processing module (not shown in detail). In such a processing module, the signals from the temperature sensor assembly can be further processed.

To allow an easy mounting, the receptacle 20 is located at a first side 11 of the temperature sensor assembly 100 and the connection section 60 is located at a second side 12 of the temperature sensor assembly 100 opposite the first side 11.

The connection section 60 is located in a housing part 70 that is detachable from the carrier part 10. It can be attached and detached repeatedly. In other versions, the housing part 70 and/or the connection section 60 could be integral with the carrier part 10.

At least one terminal 65 in the connection section 60 is connected to the sensor element 30. Such a connection can be either direct or indirect via an intermediate element such as a wire or cable 68.

The carrier part 10 and the housing part 70 are adapted to be attached to each other. They can comprise locking members, fixing members or attachment members 75. For example, a latching mechanism can allow a latching connection between the two.

The carrier part 10 comprises a housing part receptacle 17 for at least partially receiving the housing part 70.

The housing part 70 is adapted to be fixed to an external element, in particular an element of an automobile. It comprises a fixing member 77 for example in the form of at least one threaded hole 78.

The temperature sensor assembly 100 further comprises sealing elements 91, 92, namely sealing elements 91 for sealing together with further elements, for example a part of an automobile, and cable sealings 92 or terminal sealing for sealing between a cable or terminal and a part of the temperature sensor assembly 100 , for example the housing part 70.

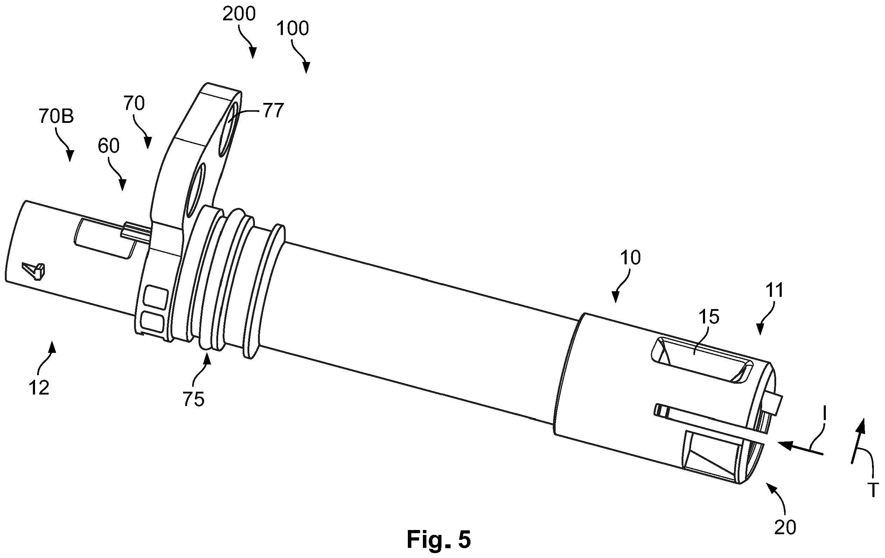

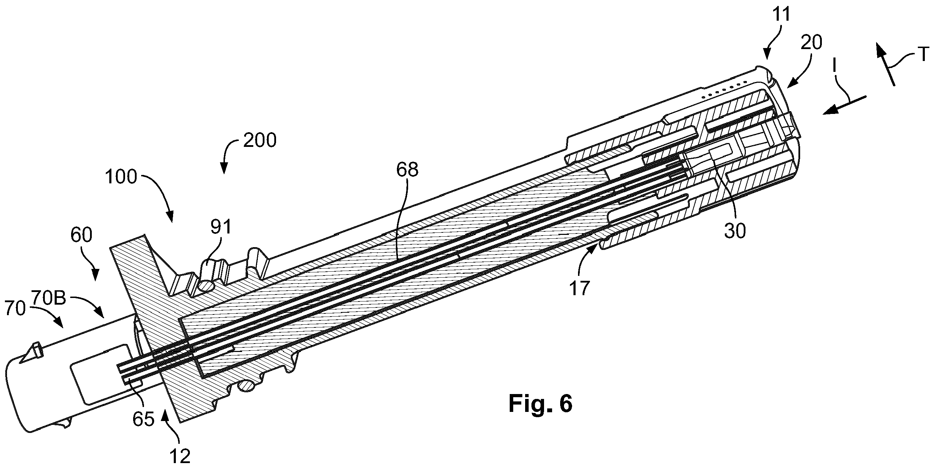

In Figs. 5 and 6, a second embodiment of the temperature sensor assembly 100 is shown. It differs in particular from the first embodiment in the length of the housing part 70 in which the connection section 60 is located. In the second embodiment, the housing 70, 70B is longer than the housing 70, 70A in the first embodiment along the insertion direction. With such a longer housing part 70, the temperature sensor assembly 100 can be used for a different kind of engine and/or car.

Each of the two embodiments can be seen as a set 200 for a temperature sensor assembly 100, comprising a carrier part 10 with a receptacle 20 for a temperature pin 50, a sensor element 30 for measuring the temperature, a pushing element 40 for pushing the sensor element 30 into the receptacle 20 and a housing part 70 that is detachable from the carrier part 10 and that comprises a connection section 60 with at least one terminal 65 for connection to a processing module.

An advantageous set 100 further comprises at least one cable 68 for connecting the sensor element 30 to the terminal 65. The cable 68 can be pre-mounted to the sensor element 30, but not to the terminal 65, so that the same cable 68 can be used for producing different temperature sensor assemblies 100. Depending on the length of the housing part 70, the cable 68 can be cut to an appropriate length and a terminal 65 can then be added to the cable 68.

A set 200 can in particular comprise at least two different housing elements 70, 70A, 70B, differing for example in dimensions, in particular lengths, or the kind and number of fixing members 77. With such a set 200 the user can create an appropriate temperature sensor assembly 100 for different types of cars.

In order to improve the temperature measurement, thermal compound, also known as heat paste or thermal paste, can be present in the receptacle 20. The thermal compound can in particular fill the area between and around the temperature pin 50 and the sensor element 30. The thermal compound can be premounted in the receptacle 20 before the temperature pin is inserted or be applied later.

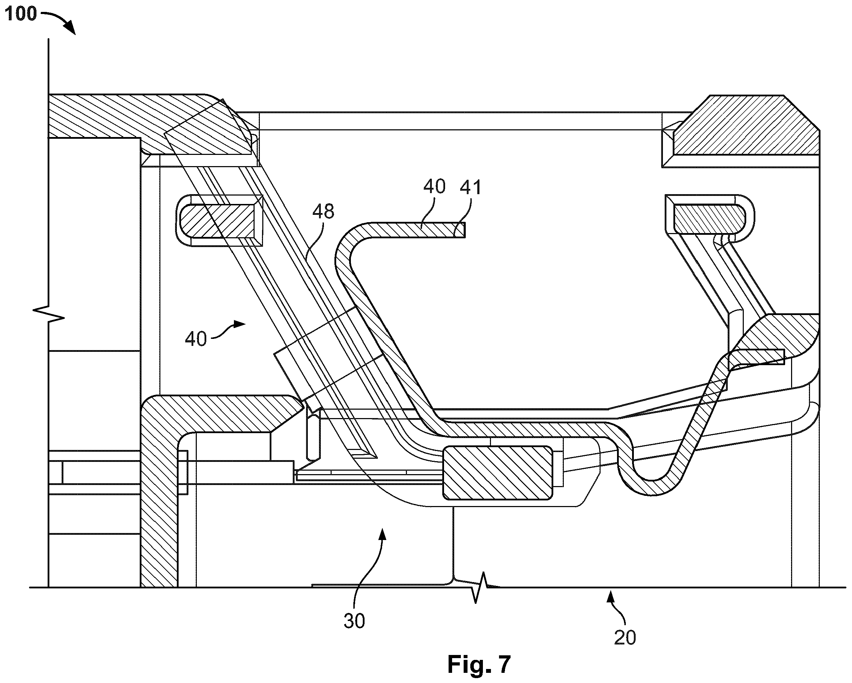

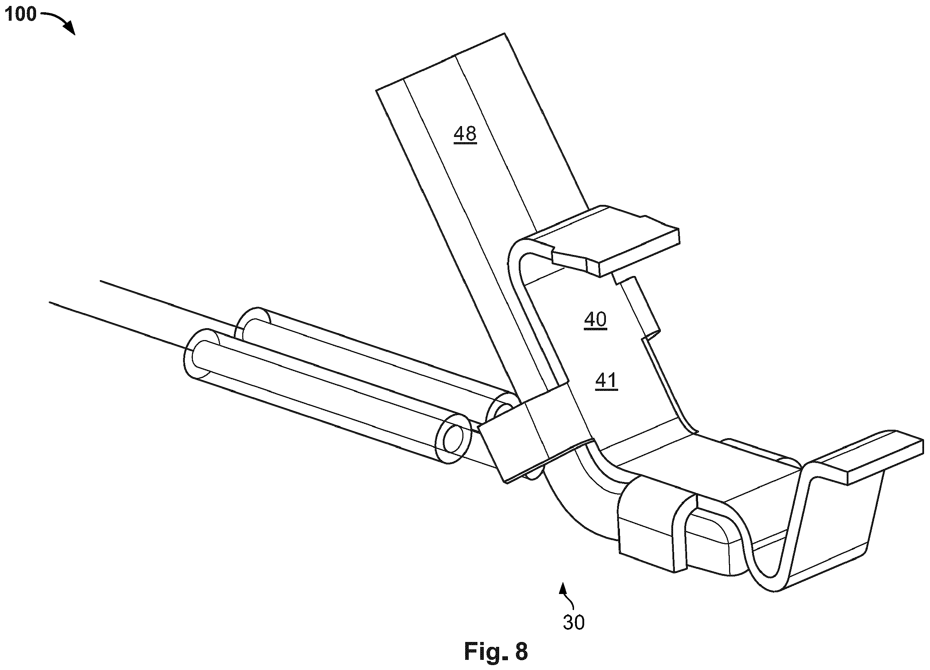

Fig. 7 and 8 show a further embodiment of a temperature sensor assembly 100. The sensor element 30 is again pushed into the receptacle by a pushing element 40. The pushing element 40 comprises a spring element 41 that is attached to an insulation element 48. The spring element 41 can be made from a metal and the insulation element 48 can be made from a material that is thermally and electrically insulating, for example plastic. The sensor element 30 can at least be partially embedded in the insulation element 48.

### REFERENCE NUMERALS

- 10: carrier part
- 11: first side
- 12: second side
- 15: recess
- 17: housing part receptacle
- 18: slit
- 20: receptacle
- 25: side
- 30: sensor element
- 40: pushing element
- 41: spring element
- 42: leaf spring
- 44: curves
- 47: end section
- 48: insulation element
- 50: temperature pin
- 60: connection section
- 65: terminal
- 68: cable
- 70: housing part
- 70A: first housing part
- 70B: second housing part
- 75: attachment member
- 77: fixing member
- 78: threaded hole
- 80: engine part
- 85: stretching recess
- 91: sealing element
- 92: cable sealing
- 95: counter terminal
- 100: temperature sensor assembly
- 200: set

- I: insertion direction
- T: transverse direction

## Claims

1. Temperature sensor assembly (100) in particular for the use in the automotive field, comprising a carrier part (10) with a receptacle (20) for a temperature pin (50), a sensor element (30) for measuring the temperature and a pushing element (40) for pushing the sensor element (30) into the receptacle.

2. Temperature sensor assembly (100) according to claim 1, wherein the pushing element (40) is adapted to push the sensor element (30) into the receptacle (20) at a side (25) of the receptacle (20).

3. Temperature sensor assembly (100) according to claim 1 or 2, wherein the pushing element (40) comprises a spring element (41).

4. Temperature sensor assembly (100) according to claim 3, wherein the spring element (41) comprises a leaf spring (42).

5. Temperature sensor assembly (100) according to claim 4, wherein the leaf spring (42) comprises three curves (44) with alternating curvature directions.

6. temperature sensor assembly (100) according to claim 5, wherein the leaf spring (42) is attached at two end sections (47)

7. Temperature sensor assembly (100) according to one of claims 1 to 6, wherein the temperature sensor assembly (100) comprises a recess (15) for at least partially accommodating the pushing element (40).

8. Temperature sensor assembly (100) according to claim 7, wherein the recess (15) is slot-shaped.

9. Temperature sensor assembly (100) according to one of claims 1 to 8, wherein the temperature sensor assembly (100) comprises a connection section (60) with at least one terminal (65) for connection to a processing module.

10. Temperature sensor assembly (100) according to claim 9, wherein the receptacle (20) is located at a first side (11) of the temperature sensor assembly (100) and the connection section (60) is located at a second side (12) of the temperature sensor assembly (100) opposite the first side (11).

11. Temperature sensor assembly (100) according to one of claims 9 or 10, wherein the connection section (60) is located in a housing part (70) that is detachable from the carrier part (10).

12. Temperature sensor assembly (100) according to claim 11, wherein the carrier part (10) comprises a housing part receptacle (17) for at least partially receiving the housing part (70).

13. Temperature sensor assembly (100) according to one of claims 11 or 12, wherein the housing part (70) is adapted to be fixed to an external element, in particular an element of an automobile.

14. Set (200) for a temperature sensor assembly (100), comprising a carrier part (10) with a receptacle (20) for a temperature pin (50), a sensor element (30) for measuring the temperature, a pushing element (40) for pushing the sensor element (30) into the receptacle (20), and a housing part (70) that is detachable from the carrier part (10) and that comprises a connection section (60) with at least one terminal (65) for connection to a processing module.

15. Set (200) according to claim 14, wherein the set (200) comprises at least two different housing elements.
